# EUROPÄISCHE PATENTSCHRIFT

(11) **EP 3 035 463 B1**
(45) Veröffentlichungstag und Bekanntmachung des Hinweises auf die Patenterteilung: **06.11.2019**
(21) Anmeldenummer: 15306873.9
(22) Anmeldetag: 26.11.2015
(51) Int. Cl.: H02G 3/08, H02G 3/10

(54) **ELEKTRISCHES INSTALLATIONSGERÄT**
ELECTRIC INSTALLATION DEVICE
APPAREIL D'INSTALLATION ELECTRIQUE

(30) Priorität: 19.12.2014 DE 102014119271
(43) Veröffentlichungstag der Anmeldung: 22.06.2016
(73) Patentinhaber: Schneider Electric Industries SAS, 92500 Rueil-Malmaison (FR)
(72) Erfinder: Rao, Arjun, 51643 Gummersbach (DE)
(74) Vertreter: Manitz Finsterwald Patent- und Rechtsanwaltspartnerschaft mbB

(56) Entgegenhaltungen:
- EP-A2- 2 043 123
- DE-A1- 19 639 254
- DE-U1- 29 616 958
- DE-U1-202011 100 118

## Beschreibung

Die Erfindung betrifft ein abgedichtetes elektrisches Installationsgerät nach dem Oberbegriff des Patentanspruchs 1 wie offenbart in EP 2 043 123 A2.

Elektrische Installationsgeräte werden im Rahmen der Installationstechnik sowohl bei der Erstausstattung als auch im Nachrüstbereich eingesetzt. Bei vielfältigen Anwendungen sind Installationsgeräte aufbauend an einer vertikal ausgerichteten Unterkonstruktion montiert. Ein einfacher Zugriff in einen Innenraum des Installationsgerätes, insbesondere für Installationszwecke, wird durch die konstruktive Trennung eines Gehäuses in ein Unterteil und ein Oberteil ermöglicht. Um die Beeinträchtigung der elektrischen Funktionen durch Umwelteinflüsse, insbesondere an den Trennstellen des Gehäuses das Eindringen von Wasser oder von Fremdkörpern, zu verhindern, werden das Unterteil und das Oberteil unter Zwischenlage einer Dichtung aufeinander befestigt. Entsprechende abgedichtete Installationsgeräte sind grundsätzlich bekannt und können beispielsweise als Schalter, Steckdose, Schlüsselschalter, Not-Aus-Schalter, Thermostat, optischer Signalmelder, Bewegungsmelder, Präsenzmelder, Kamera oder dergleichen ausgeführt sein.

Die elektrische Funktionalität wird durch in dem Gehäuse und/oder an dem Gehäuse des Installationsgerätes angeordnete Geräteteile geschaffen. In dem ortsfest befestigbaren Unterteil ist ein funktionsabhängiger, vorzugsweise elektrischer, Einsatz angeordnet. Das Oberteil stellt die sichtbare Abdeckung des Installationsgerätes dar und umfasst ein nutzerseitiges Funktionselement, das mit dem elektrischen Einsatz mechanisch und elektrisch zusammenwirkt. Häufig weist der elektrische Einsatz grundlegende Funktionalitäten auf, während das vorgesetzte Funktionselement das Installationsgerät vervollständigt und je nach Ausführung Varianten im Design und/oder in der Funktion des Installationsgerätes ermöglicht.

Häufig werden während der mechanischen Kopplung von Oberteil und von Unterteil durch komplementär zusammenwirkende Befestigungsvorrichtungen gleichzeitig eine mechanische Verbindung und/oder eine elektrische Verbindung zwischen dem elektrischen Einsatz und dem Funktionselement geschaffen. Die mechanische Kopplung von Oberteil und von Unterteil erfolgt mittels unterschiedlicher Befestigungsmethoden, beispielsweise mittels Schrauben, Rastmechanismen und/oder federndem Eingriff, wobei die zwischen Oberteil und Unterteil angeordnete Dichtung elastisch komprimiert wird, um das Gehäuse gegen Umwelteinflüsse abzudichten. Je nach Ausführung liegen die Befestigungsvorrichtungen außerhalb oder innerhalb der Dichtungsebene.

Derartige Installationsgeräte weisen jedoch Unzulänglichkeiten auf. Durch die übliche Montage derartiger Installationsgeräte an vertikal ausgerichteten Unterkonstruktionen ist die Trennstelle zwischen Oberteil und Unterteil grundsätzlich der natürlichen Fließ- und Fallrichtung einer Flüssigkeit ausgesetzt. Trotz Abdichtung ist eine derartige Anordnung der Trennstelle in Fließrichtung zumindest ein potentieller Gefahrenpunkt.

Die DE 20 2011 100 118 U1 offenbart eine größenanpassbare Tauchglocke für einen Stromverteiler eines Unterflursystems.

Die Aufgabe der vorliegenden Erfindung besteht darin, die vorstehend genannten Nachteile zu beseitigen und ein elektrisches Installationsgerät der eingangs genannten Art zu schaffen, mit dem der Schutz vor Umwelteinflüssen verbessert werden kann.

Gelöst wird diese Aufgabe durch die im Patentanspruch 1 angegebenen Merkmale. Vorteilhafte Ausgestaltungen ergeben sich aus den Unteransprüchen.

Die Erfindung gemäß Patentanspruch 1 weist den Vorteil auf, dass eine Trennstelle zwischen einem Unterteil und einem Oberteil eines Gehäuses eines elektrischen Installationsgerätes geschützt außerhalb der Fließrichtung und der Fallrichtung von Flüssigkeiten angeordnet ist und dadurch das Risiko eines Flüssigkeitseintritts verringert wird. An vertikalen Unterkonstruktionen abfließende Flüssigkeiten gelangen nicht an die Trennstelle. Die Trennstelle ist frontseitig des Installationsgerätes ausgebildet und nur der unüblichen Einwirkung von horizontaler Flüssigkeitseinwirkung ausgesetzt. Mit anderen Worten verläuft eine Trennebene bzw. Trennfläche zwischen Unterteil und Oberteil nicht parallel zur Vorderfront des Installationsgerätes sondern quer dazu.

Der Außenumfang des Oberteils kann kleiner als der Innenumfang von umlaufenden Seitenwänden des Unterteils sein. Das Oberteil kann von den Seitenwänden des Unterteils zumindest teilweise umschlossen in dem Unterteil angeordnet sein und kann in axialer Richtung, d.h. in einer Richtung quer zur Vorderfront des Installationsgerätes, in dem Unterteil insbesondere bündig eingelassen bzw. eingesetzt sein. Durch die eingelassene bzw. flächenbündig eingesetzte Anordnung des Oberteils in dem Unterteil ist eine vertikale Flüssigkeitseinwirkung an der Trennstelle verhindert.

Das Oberteil und/oder das Unterteil kann vollumfänglich, d.h. über seinen gesamten Umfang, und vollständig, d.h. ohne Unterbrechungen, eine Dichtung aufweisen. In einer Ausführungsform kann die Dichtung an umlaufenden Außenwänden des Oberteils befestigt sein, beispielsweise mittels Formschluss, elastischer Vorspannung, Adhäsion oder mittels entsprechender Profilierungen. In einer weiteren Ausführungsform sind die Dichtung und das Oberteil oder dessen Außenwände einstückig ausgebildet. Bei der Montage des Oberteils in dem Unterteil kann die Dichtung zwischen den Außenwänden des Oberteils und den Seitenwänden des Unterteils abdichtend komprimiert werden, so dass eine Abdichtung erfolgt. Die Außenseite der Dichtung kann dann entlang der Innenseiten der Seitenwände des Unterteils angeordnet sein und die Innenseite der Dichtung kann das Oberteil umfassend angeordnet sein. Eine untere Kante der Dichtung kann formschlüssig in einer Nut einer Profilstruktur liegen, während eine obere Kante der Dichtung nutzerseitig frei sichtbar am Oberteil angeordnet sein kann.

In dem Unterteil kann mindestens eine Profilstruktur ausgebildet sein, die sich von einer Rückwand des Unterteils in Richtung der Öffnung des Unterteils erstreckt, insbesondere parallel zu den Seitenwänden und/oder entlang den Seitenwänden. Die Profilstruktur kann einstückig mit der Rückwand und/oder den Seitenwänden ausgebildet sein. Die Profilstruktur kann einerseits als Auflage für das Oberteil dienen und andererseits die Steifigkeit des Unterteils erhöhen. Gleichzeitig kann die Profilstruktur die Einlasstiefe und damit die axiale Positionierung des Oberteils in dem Unterteil vorgeben. Im montierten Zustand von Oberteil und von Unterteil kann das Oberteil bündig in das Unterteil eingesetzt sein, d.h. in axialer Richtung (Einsetzrichtung) gar nicht oder nur unwesentlich über das Unterteil vorstehen. Lediglich Teile eines in dem Oberteil angeordneten Funktionselementes können das Oberteil überragen und insofern aus der Trennebene vorstehen.

Die Dichtung lässt sich kostengünstig herstellen. Nach einer ersten vorteilhaften Ausführungsform kann die Dichtung einstückig aus Hartkunststoff ausgebildet sein. Nach einer zweiten vorteilhaften Ausführungsform kann die Dichtung einstückig aus Hartkunststoff ausgebildet sein und einen integrierten Dichtabschnitt aus Weichkunststoff aufweisen. Eine solche Dichtung kann beispielsweise im Zweikomponenten-Spritzverfahren hergestellt sein. Sofern die Dichtung und das Oberteil oder dessen Außenwände einstückig ausgebildet sind, gelten dieselben Kriterien.

Die Dichtung kann als rechteckiger Rahmen mit vier einstückig verbundenen Seitenschenkeln und einer zentralen Öffnung ausgebildet sein, wobei die Seitenschenkel einen länglichen Querschnitt aufweisen können und/oder wobei sich die Flächen der Seitenschenkel insbesondere quer zur Öffnungsfläche erstrecken können. Andere geometrische Formen können in Abhängigkeit von der Form des Installationsgerätes ebenfalls realisiert werden. Je nach Ausführungsform können einerseits die Dichtung außenseitig und/oder innenseitig und andererseits die Innenseiten der Seitenwände des Unterteils sowie die Außenwände des Oberteils zusammenwirkende Profile aufweisen, um eine Befestigung der Dichtung an dem Oberteil und/oder an dem Unterteil zu vereinfachen sowie eine korrekte Position der Dichtung zwischen dem Oberteil und dem Unterteil zu gewährleisten und/oder ein Verrutschen der Dichtung zu verhindern. Weiterhin kann die Dichtung an ihrem Außenumfang mit Weichkunststoff versehen sein, um gut zwischen dem Unterteil und dem Oberteil abzudichten.

Die mechanische Kopplung von Oberteil und von Unterteil kann mittels unterschiedlicher Befestigungsmethoden, beispielsweise mittels Schrauben, Rastmechanismen, federndem Eingriff oder komplementär zusammenwirkender Befestigungsvorrichtungen erfolgen, wobei die zwischen Oberteil und Unterteil angeordnete Dichtung elastisch komprimiert werden kann, um das Gehäuse gegen Umwelteinflüsse abzudichten. Die Befestigungsvorrichtungen können einerseits in dem Oberteil oder in dem am Oberteil angeordneten Funktionselement ausgebildet sein und andererseits oder zusätzlich im Unterteil selber oder in dessen Profilstruktur ausgebildet sein. Je nach Ausführung liegen die Befestigungsvorrichtungen außerhalb oder innerhalb der Dichtungsebene. Von der Rückwand des Unterteils können Gehäuseprofile in den Innenraum hineinragen, die einstückig angeformt sind und die zur Positionierung und zur Aufnahme des elektrischen Einsatzes dienen können. Dabei greifen die Gehäuseprofile und der elektrische Einsatz formschlüssig ineinander.

In einer Ausführungsform können an dem Oberteil und an dem Unterteil miteinander zusammenwirkende Positionierungshilfen ausgebildet sein, die bei der Zusammenführung beider Bauteile eine frühzeitige und exakte Positionierung ermöglichen. Die Positionierungshilfen können als komplementäre Elemente ausgeführt sein, beispielsweise in Form von Kulissen und entsprechenden Führungen, von Domen und entsprechenden Öffnungen und/oder in Form von erhöhten Rändern.

Die elektrische Funktionalität wird durch in dem Gehäuse und/oder an dem Gehäuse des Installationsgerätes angeordnete Geräteteile geschaffen. In dem ortsfest befestigbaren Unterteil kann ein funktionsabhängiger, vorzugsweise elektrischer, Einsatz angeordnet sein. Das Oberteil stellt die sichtbare Abdeckung des Installationsgerätes dar und kann ein nutzerseitiges Funktionselement umfassen, das mit dem elektrischen Einsatz mechanisch und elektrisch zusammenwirkt.

Der elektrische Einsatz und das Funktionselement können jeweils aus einem kompakten Modul oder aus mehreren separaten Modulen bestehen, so dass im Bedarfsfall Module ausgetauscht oder umgerüstet werden können. Das Oberteil und das Funktionselement können aus mehreren separaten körperlichen Einheiten zusammengefügt sein oder als eine körperliche Einheit ausgebildet sein. Ebenso können der elektrische Einsatz und das Funktionselement als separate körperliche Einheiten ausgebildet oder als eine körperliche Einheit ausgebildet sein. Häufig weist der elektrische Einsatz grundlegende Funktionalitäten auf, während das vorgesetzte Funktionselement das Installationsgerät vervollständigt und je nach Ausführung Varianten im Design und/oder in der Funktion des Installationsgerätes ermöglicht.

Die mechanische Verbindung von elektrischem Einsatz und vorgesetztem Funktionselement aneinander kann mittels kraft- und/oder formschlüssiger Haltevorrichtungen erfolgen, die komplementär zusammenwirkend am elektrischen Einsatz und am Funktionselement angeordnet sind. Die Haltevorrichtungen können beispielsweise in Form von Rastmitteln, in Form von Domen und entsprechenden Öffnungen und/oder in Form von Schraubverbindungen ausgeführt sein. In einer Ausführungsform kann an einer Rückseite des Funktionselementes eine Trägerplatte angeordnet sein, auf welcher beispielsweise elektrische Bauteile montiert sind. Auf dieser Trägerplatte sind desweiteren Federmittel angeordnet, die entsprechende Öffnungen am elektrischen Einsatz hintergreifen, wodurch das Funktionselement am elektrischen Einsatz befestigt wird. Alternativ kann ein magnetisches Befestigungssystem verwendet werden, das aus mindestens einem Dauermagneten und aus mindestens einem magnetisch anziehbaren (ferromagnetischen) Werkstoff oder mindestens einem weiteren Dauermagneten bestehen kann. Häufig werden während der mechanischen Kopplung von Oberteil und von Unterteil gleichzeitig eine mechanische Verbindung und/oder eine elektrische Verbindung zwischen dem elektrischen Einsatz und dem Funktionselement geschaffen.

Die elektrische Verbindung zwischen einem elektrischen Einsatz und einem Funktionselement ermöglicht die Übertragung von Energie und/oder Daten und kann durch eine galvanische Kopplung häufig mittels elektrischer Steckkontakte erfolgen. Alternativ kann auch eine kontaktlose Übertragung von elektrischer Energie und/oder Daten ohne Kabel mit elektromagnetischer Induktion, Resonanz, Radiofrequenztechnik oder anderen Techniken realisiert werden. Der elektrische Einsatz kann mit einem elektrischen Versorgungsnetz verbunden sein oder einen autarken Energiespeicher aufweisen.

In dem Unterteil können Gehäuseaussparungen vorgesehen sein, durch die wandseitig verlegte Leitungen abgedichtet eingeführt werden, die an den elektrischen Einsatz angeschlossen werden. Hierzu kann jeweils ein Dichtungselement in eine Gehäuseaussparung eingesetzt werden. Das Dichtungselement kann sich bis zum oberen Rand der Gehäuseaussparung des Unterteils erstrecken, so dass das elektrische Installationsgerät auch im Bereich der Gehäuseaussparung durch Einsetzen des Oberteils in das Unterteil abgedichtet verschlossen ist. Optional können das Dichtungselement und die Dichtung sowie das Oberteil zusammenwirkende Profile aufweisen, die ein korrektes Positionieren des Dichtungselementes in der Gehäuseaussparung gewährleisten. Vorzugsweise ist das Dichtungselement durch die Profilierungen mit einer Kraft in Richtung des Unterteils beaufschlagbar. Auf diese Weise ist sichergestellt, dass das Dichtungselement fest in der Gehäuseaussparung aufgenommen ist.

Zur ortsfesten Montage des elektrischen Installationsgerätes auf einer Unterkonstruktion, beispielsweise einer Gebäudewand, kann das Unterteil vorzugsweise mit Schrauben befestigt werden. Entsprechende Montageöffnungen können im Boden des Unterteils vorgesehen sein. Der abgedichtete Innenraum des Gehäuses des Installationsgerätes umschließt dann die Montageöffnungen, so dass von außen keine Feuchtigkeit durch die Montageöffnungen in das Innere des Installationsgerätes eindringen kann.

Das Unterteil und das Oberteil sowie der elektrische Einsatz und das Funktionselement können aus einem Kunststoff oder aus ähnlichen Materialien hergestellt sein. Die elektrischen Komponenten sind aus elektrisch leitendem, vorzugsweise metallischem, Material hergestellt und können in die entsprechenden Geräteteile eingebettet sein.

Das Installationsgerät kann in Form und Größe variieren. Üblicherweise kann das Installationsgerät quaderförmig ausgebildet sein, sodass das Unterteil und das Oberteil in Montagerichtung eine rechteckige Querschnittsform aufweisen. In einer Ausführungsform kann das Installationsgerät mehrere Installationsgeräte unterschiedlichster Funktionalität aufweisen, wobei ein entsprechendes Unterteil Montageplätze für mehrere Oberteile aufweisen kann. Die Montageplätze können universell ausgebildet sein, so dass vielfältige Installationsgeräte im Rahmen eines Produktprogrammes verwendet werden können. Die notwendige rastermäßige Unterteilung zur Aufnahme der jeweiligen elektrischen Einsätze und Oberteile können durch eine an den Seitenwänden umlaufende Profilstruktur und mindestens eine von der Rückwand vorstehende, unterteilende Profilstruktur in dem Unterteil realisiert werden. Die Profilstrukturen dienen gleichzeitig als Auflage und als Träger von Befestigungsvorrichtungen für das Oberteil. Die Oberteile sind dabei teilweise von einer umlaufenden Seitenwand umgeben und grenzen teilweise aneinander.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:
- Figur 1: eine Explosionsansicht eines elektrischen Installationsgerätes im demontierten Zustand,
- Figur 2: eine perspektivische Ansicht des elektrischen Installationsgeräts gemäß Figur 1 im montierten Zustand,
- Figur 3: eine perspektivische Ansicht einer Dichtung,
- Figur 4: eine Explosionsansicht einer weiteren Ausführungsform eines elektrischen Installationsgerätes im demontierten Zustand, und
- Figur 5: eine perspektivische Ansicht des elektrischen Installationsgeräts gemäß Figur 4 im montierten Zustand.

Gleiche oder gleichwirkende Bauteile sind in der nachfolgenden Beschreibung mit gleichen Bezugszeichen versehen.

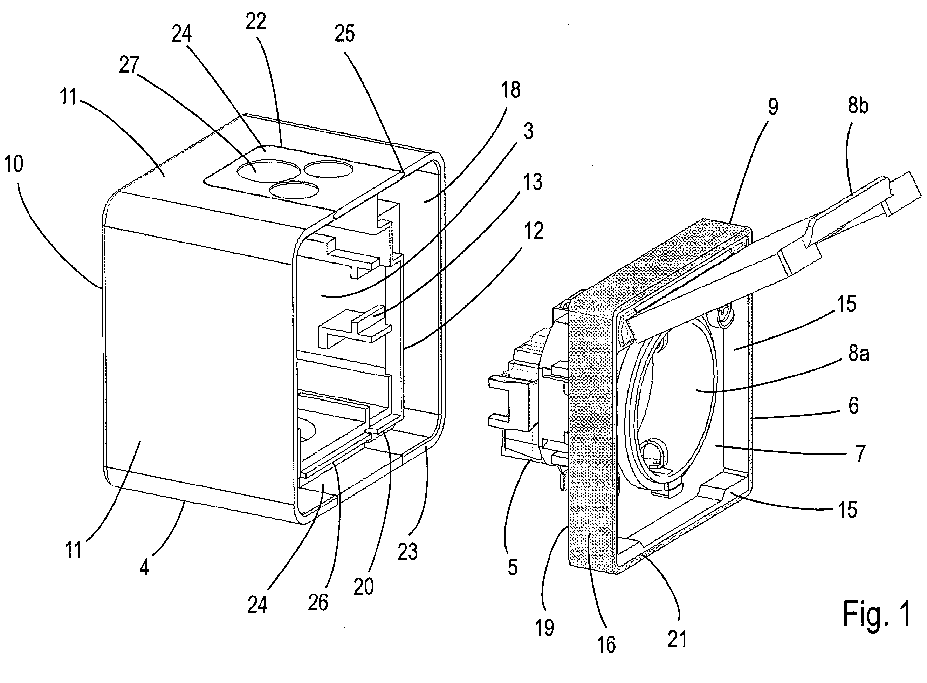

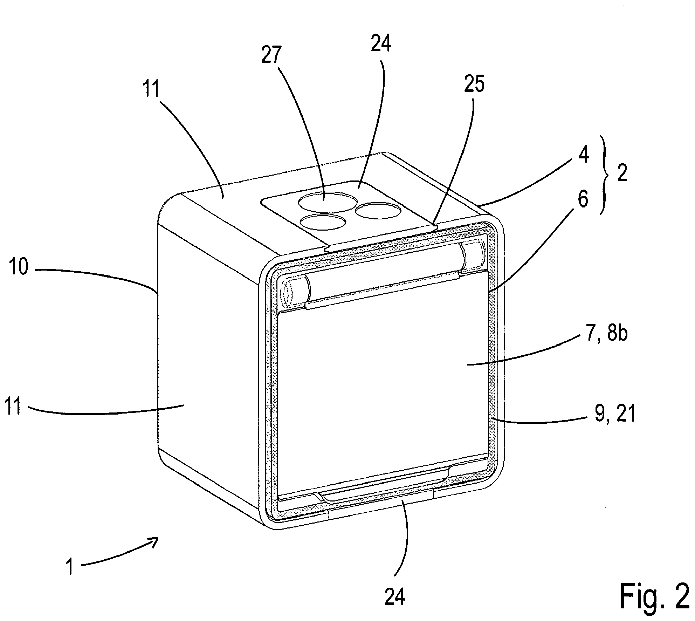

In den Figuren 1 und 2 ist eine erste Ausführungsform eines elektrischen Installationsgerätes 1 in Form einer Steckdose gezeigt, die vorzugsweise auf einer vertikalen Unterkonstruktion (nicht dargestellt) befestigbar ist, beispielsweise an einer Gebäudewand oder an einer industriellen Anlage. Das elektrische Installationsgerät 1 weist ein Gehäuse 2 auf, das einen Innenraum 3 umschließt. Das Gehäuse 2 besteht aus einem einseitig offenen quaderförmigen Unterteil 4, in dem ein elektrischer Einsatz 5 angeordnet werden kann, und aus einem Oberteil 6 mit einem nutzerseitigen Funktionselement 7. Zwischen dem Unterteil 4 und dem Oberteil 6 ist eine Dichtung 9 angeordnet.

Die elektrische Funktionalität des Installationsgerätes 1 wird durch den elektrischen Einsatz 5 und das Funktionselement 7 realisiert. Der elektrische Einsatz 5 weist in der Ausführung als Steckdose die grundlegenden Funktionalitäten auf, nämlich nicht dargestellte Anschlussklemmen für wandseitig verlegte Leitungen und Kontaktelemente für in die Steckdose einzuführende Kontaktstifte eines Gerätesteckers. Das nutzerseitige Funktionselement 7 ist in dem Oberteil 6 angeordnet und stellt die sichtbare Abdeckung des Installationsgerätes 1 dar. Das Oberteil 6 und das Funktionselement 7 bilden eine einstückige körperliche Einheit. Diese Einheit vervollständigt das Installationsgerät 1 im Design und in der Funktion in Form eines Aufnahmetopfes 8a, der für den Gerätestecker eine formschlüssige Aufnahme bildet, und eines angelenkten Deckels 8b. Nach der vollständigen Montage und Zusammenbau des Installationsgerätes 1 wirken der elektrische Einsatz 5 und das Funktionselement 7 mechanisch und elektrisch zusammen.

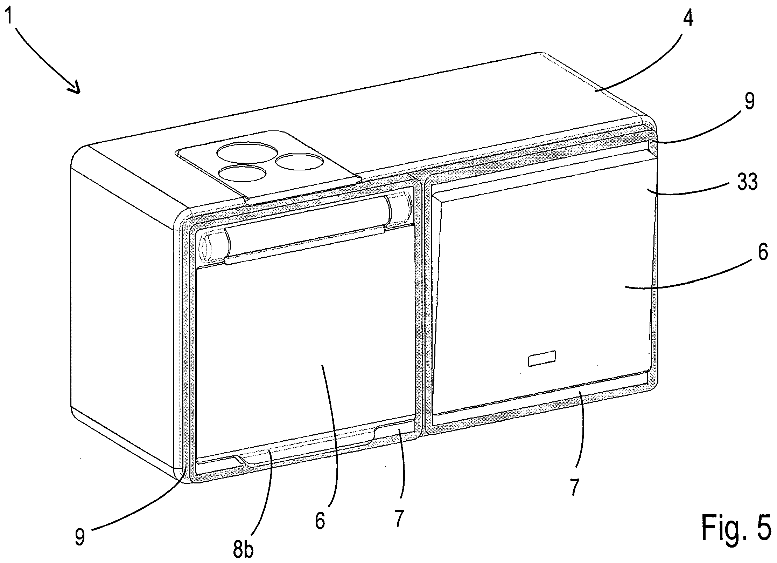

Das Unterteil 4 weist eine rechteckige Rückwand 10 und vier umlaufende Seitenwände 11 auf, wobei in dem Unterteil 4 Profilstrukturen 12 eingebettet sind, die als Versteifung des Unterteils 4 und als Auflage für das Oberteil 6 dienen. Die Profilstrukturen 12 erstrecken sich von der Rückwand 10 entlang den Seitenwänden 11 und sind einstückig angeformt. Die Profilstrukturen geben die Einlasstiefe und damit die axiale Positionierung des Oberteils 6 in dem Unterteil 4 vor. Im montierten Zustand (Figur 2) von Oberteil 6 und von Unterteil 4 überragen in axialer Erstreckung (Richtung von Montage und Demontage von Oberteil und Unterteil) lediglich Teile, wie z.B. Scharnier und Greifsteg, des in dem Oberteil 6 angeordneten Funktionselementes 7 das Unterteil 6. Die Darstellung in den Figuren 2 und 5 weicht insofern von der hier beschriebenen Ausführungsform etwas ab, da in den Figuren die Dichtung 9 über das Unterteil 4 vorzustehen scheint, was allerdings nur einer Ausführungsvariante entspricht. Es ist vorteilhaft, wenn auch Dichtung 9 und Oberteil 6 bündig mit der vorderen Fläche des Unterteils abschließen oder sogar noch hinter diese Fläche zurückspringen.

Desweiteren ragen von der Rückwand 10 des Unterteils 4 Aufnahmeprofile 13 in den Innenraum 3 hinein, die einstückig angeformt sind und die zur Positionierung und zur Aufnahme des elektrischen Einsatzes 5 dienen.

Dabei wirken die Aufnahmeprofile 13 und der elektrische Einsatz 5 formschlüssig miteinander.

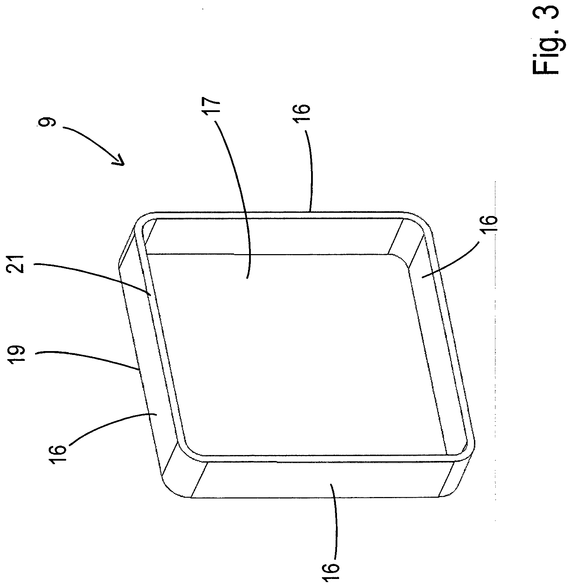

Das Oberteil 6 umfasst eine Aufnahme für das Funktionselement 7 und weist vier umlaufende Außenwände 15 auf. Die Außenwände 15 bilden einen Außenumfang aus, der geringer ist als der Innenumfang der Seitenwände 11 des Unterteils 4. Das Oberteil 6 ist an den Außenwänden 15 vollumfänglich und vollständig von der Dichtung 9 umschlossen, die z.B. mittels elastischer Vorspannung die Außenwände 15 umfassend befestigt ist. Die Dichtung 9 weist eine Rahmenform mit vier einstückig verbundenen Seitenschenkeln 16 und einer zentralen Öffnung 17 auf (Figur 3). Im Querschnitt sind die Seitenschenkel 16 linienförmig ausgebildet. Die Dichtung 9 ist einstückig aus Weichkunststoff ausgebildet.

Bei der Montage des Oberteils 6 in dem Unterteil 4 wird die Dichtung 9 zwischen den umlaufenden Außenwänden 15 des Oberteils 6 und den Seitenwänden 11 des Unterteils 4 abdichtend komprimiert, so dass eine Abdichtung erfolgt. Dabei ist die Dichtung 9 außenseitig entlang von Innenseiten 18 der Seitenwände 11 des Unterteils 4 angeordnet, während die Dichtung 9 innenseitig die Außenwände 15 des Oberteils 6 umfassend angeordnet ist. Eine innere Kante 19 der Dichtung 9 liegt formschlüssig in einer Nut 20 der Profilstruktur 12, während deren äußere Kante 21 nutzerseitig frei sichtbar am Oberteil 6 angeordnet ist.

An zwei gegenüberliegenden Seitenwänden 11 des Unterteils 4 ist jeweils eine Gehäuseaussparung 22 vorgesehen. Jede Gehäuseaussparung 22 ist einseitig, nämlich zur Oberseite bzw. Vorderseite 23 des Unterteils 4 hin offen, so dass von oben bzw. vorne ein Dichtungselement 24 in die Gehäuseaussparung 22 eingesetzt werden kann. Dabei wirken formschlüssige Führungen 25 miteinander zusammen, so dass die Gehäuseaussparungen 22 durch das Dichtungselement 24 abgedichtet verschlossen sind. Innenseitig weisen die Dichtungselemente 24 Profilstrukturen 26 auf, die zu den Profilstrukturen 12 des Unterteils 4 ausgerichtet sind. Die Dichtungselemente 24 weisen vordefinierte durchtrennbare Dichtmembrane 27 auf, durch die Leitungen abdichtend in das Installationsgerät 1 eingeführt werden können. Die Rückwand 10 weist Montageöffnungen (nicht dargestellt) auf, durch die mittels Schrauben eine Befestigung an einer Unterkonstruktion möglich ist. An den Montageöffnungen sind Kanäle 28 ausgebildet, um die Schrauben durchstecken zu können.

Die mechanische Kopplung von Oberteil 6 und von Unterteil 4 erfolgt mittels Befestigungsvorrichtungen 29, 30, wobei die zwischen Oberteil 6 und Unterteil 4 angeordnete Dichtung 9 elastisch komprimiert wird, um das Gehäuse 2 gegen Umwelteinflüsse abzudichten. Die Befestigungsvorrichtungen sind einerseits in Form von Schrauben 29, die in dem Oberteil 6 oder in dem am Oberteil 6 angeordneten Funktionselement 7 angeordnet sind, und andererseits in Form von Bohrungen 30, die in der Profilstruktur 12 ausgebildet sind, ausgeführt. Die Befestigungsvorrichtungen 29 und 30 befinden sich innerhalb des abgedichteten Bereiches. Nachdem das Oberteil 6 in das Unterteil 4 eingelassen ist, ist das Gehäuse 2 fest verschlossen, so dass keinerlei Feuchtigkeit oder gar Flüssigkeit in das Innere des Installationsgeräts 1 eindringen kann. Das Oberteil 6 ist von Seitenwänden 11 des Unterteils 4 umschlossen eingelassen in dem Unterteil 4 angeordnet. Durch die eingelassene Anordnung des Oberteils 6 in dem Unterteil 4 ist eine vertikale Flüssigkeitseinwirkung an der Trennstelle zwischen Oberteil 6 und Unterteil 4 nicht möglich. Im Bereich der Gehäuseaussparungen 22 wird das Oberteil 6 mit der Dichtung 9 fest auf die Profilstruktur 26 gedrückt, sobald das Unterteil 4 mit dem Oberteil 6 fest verbunden ist.

Die mechanische Verbindung von elektrischem Einsatz 5 und von vorgesetztem Funktionselement 7 aneinander erfolgt mittels kraft- und/oder formschlüssiger Haltevorrichtungen (nicht dargestellt), die komplementär zusammenwirkend am elektrischen Einsatz 5 und am Funktionselement 7 angeordnet sind. Während der mechanischen Kopplung von Oberteil 6 und von Unterteil 4 werden gleichzeitig eine mechanische Verbindung und/oder eine elektrische Verbindung zwischen dem elektrischen Einsatz 5 und dem Funktionselement 7 geschaffen. Die elektrische Verbindung zwischen dem elektrischen Einsatz 5 und dem Funktionselement 7 ermöglicht die Übertragung von Energie und/oder Daten.

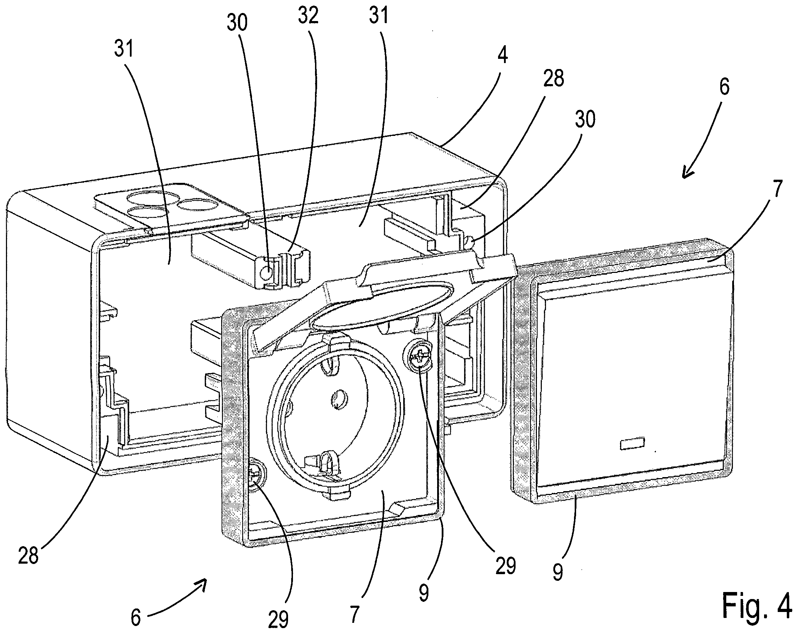

Das Installationsgerät 1 kann in Form und Größe variieren. In einer Ausführungsform kann das Installationsgerät 1 mit weiteren Installationsgeräten unterschiedlichster Funktionalität kombiniert werden, wobei ein entsprechendes Unterteil 4 Montageplätze 31 für mehrere Oberteile 6 aufweist. Bei der in den Figuren 4 und 5 dargestellten Ausführungsform ist ein Installationsgerät 1 vorgesehen, das zwei Montageplätze 31 aufweist, wobei gleiche Teile mit gleichen Bezugszeichen versehen sind.

Die Montageplätze 31 sind universell ausgebildet, so dass unterschiedlichste Installationsgeräte 1 im Rahmen eines Produktprogrammes verwendet werden können. Die notwendige rastermäßige Unterteilung zur Aufnahme der jeweiligen elektrischen Einsätze 5 und Oberteile 6 wird durch eine die Montageplätze 31 definierende Profilstruktur 32 in dem Unterteil 4 ausgebildet. Die Oberteile 6 sind nach der Montage im Unterteil 4 dabei teilweise von einer umlaufenden Seitenwand 11 umgeben und grenzen teilweise aneinander. Dabei ist zwischen den Montageplätzen 31 die Profilstruktur 32 ausgebildet, die als Auflage für die Oberteile 6 bzw. die umgebenden Dichtungen 9 und gleichzeitig als Träger für die Befestigungsvorrichtungen 29, 30 dient. Zwischen den beiden Oberteilen 6 erfolgt eine Abdichtung durch inbesondere komprimierte Aneinanderlage der beiden die Oberteile 6 umgebenden Dichtungen 9.

Die beiden Montageplätze 31 gemäß den Figuren 4 und 5 sind in Form einer Steckdose und eines Schalters ausgeführt. Der elektrische Einsatz 5 weist in der Ausführung als Schalter die grundlegenden Funktionalitäten auf, nämlich nicht dargestellte Anschlussklemmen für wandseitig verlegte Leitungen und eine Schaltmechanik. Das nutzerseitige Funktionselement 7 des Schalters ist in dem Oberteil 6 angeordnet und stellt die sichtbare Abdeckung des Installationsgerätes 1 dar. Das Oberteil 6 und das Funktionselement 7 bilden eine einstückige körperliche Einheit. Diese Einheit vervollständigt das Installationsgerät 1 im Design und in der Funktion in Form einer Schaltwippe 33, die auf die Schaltmechanik wirkt und elektrisch verbundene Verbraucher ansteuert.

Die vorstehende Beschreibung des Ausführungsbeispieles dient nur zu illustrativen Zwecken und nicht zum Zwecke der Beschränkung der Erfindung. Im Rahmen der Erfindung gemäß der Ansprüche sind verschiedene Änderungen und Modifikationen möglich, ohne den Umfang der Erfindung gemäß der Ansprüche sowie ihrer Äquivalente zu verlassen.

### Bezugszeichenliste

- 1: Elektrisches Installationsgerät
- 2: Gehäuse
- 3: Innenraum
- 4: Unterteil
- 5: Elektrischer Einsatz
- 6: Oberteil
- 7: Funktionselement
- 8a: Aufnahmetopf
- 8b: DeckelDichtung
- 9: Dichtung
- 10: Rückwand
- 11: Seitenwand
- 12: Profilstruktur
- 13: Aufnahmeprofil
- 14: ---
- 15: Außenwand
- 16: Seitenschenkel
- 17: Öffnung
- 18: Innenseite
- 19: Untere Kante unten
- 20: Nut
- 21: Obere Kante
- 22: Gehäuseaussparung
- 23: Oberseite
- 24: Dichtungselement
- 25: Führung
- 26: Profilstruktur
- 27: Dichtmembran
- 28: Kanal
- 29: Befestigungsvorrichtung, Schraube
- 30: Befestigungsvorrichtung, Bohrung
- 31: Montageplatz
- 32: Profilstruktur
- 33: Schaltwippe

## Patentansprüche

1. Elektrisches Installationsgerät für die Installationstechnik, das ortsfest anordenbar ist, umfassend ein Gehäuse (2) aus einem einseitig offenen Unterteil (4) und aus einem Oberteil (6) zum abgedichteten Verschließen eines Innenraumes (3), wobei das Unterteil (4) eine Rückwand (10) und Seitenwände (11) umfasst und in dem Unterteil (4) ein elektrischer Einsatz (5) angeordnet ist, wobei das Oberteil (6) ein nutzerseitiges Funktionselement (7) umfasst, das eine sichtbare Abdeckung des Installationgerätes (1) darstellt, und wobei zwischen dem Oberteil (6) und dem Unterteil (4) eine Dichtung (9) angeordnet ist, wobei das Oberteil (6) entlang seines gesamten Umfangs zwischen den Seitenwänden (11) in dem Unterteil (4) angeordnet ist, **dadurch gekennzeichnet dass** das Oberteil (6) und auch die Dichtung (9) bündig in das Unterteil eingesetzt ist.

2. Elektrisches Installationsgerät nach Patentanspruch 1, **dadurch gekennzeichnet dass** Aussenwände (15) des Oberteils (6) und/oder des Unterteils (4) vollumfänglich und vollständig eine Dichtung (9) aufweisen.

3. Elektrisches Installationsgerät nach zumindest einem der vorhergehenden Patentansprüche, **dadurch gekennzeichnet**, das in dem Unterteil (4) mindestens eine Profilstruktur (12) ausgebildet ist, die sich von der Rückwand (10) des Unterteils (4) in Richtung der Öffnung des Unterteils erstreckt, insbesondere parallel zu den Seitenwänden (11) und/ oder entlang den Seitenwänden (11).

4. Elektrisches Installationsgerät nach Patentanspruch 3, **dadurch gekennzeichnet, dass** das Oberteil (6) eingelassen in dem Unterteil (4) angeordnet ist, so dass die Aussenwände (15) des Oberteils (6) und die Dichtung (9) auf der Profilstruktur (12) aufliegen und sich die Außenwände (15) des Oberteils (6) und die Dichtung (9) zwischen der Profilstruktur (12) und einer Oberseite (23) des Unterteils (6) erstrecken.

5. Elektrisches Installationsgerät nach zumindest einem der vorhergehenden Patentansprüche, **dadurch gekennzeichnet, dass** die Dichtung (9) eine Rahmenform mit vier einstückig verbundenen Seitenschenkeln (16) und einer zentralen Öffnung (17) aufweist, wobei sich die Flächen der Seitenschenkel insbesondere quer zur Öffnungsfläche erstrecken.

6. Elektrisches Installationsgerät nach zumindest einem der vorhergehenden Patentansprüche, **dadurch gekennzeichnet, dass** die Dichtung (9) einstückig ausgebildet ist und/oder in einem 2-Komponenten-Verfahren hergestellt ist.

7. Elektrisches Installationsgerät nach zumindest einem der vorhergehenden Patentansprüche, **dadurch gekennzeichnet, dass** die Dichtung (9), insbesondere außenseitig und/oder innenseitig, und Innenseiten (18) der Seitenwände (11) des Unterteils (4) und/oder Außenwände (15) des Oberteils (6) zusammenwirkende Profile aufweisen.

8. Elektrisches Installationsgerät nach zumindest einem der vorhergehenden Patentansprüche, **dadurch gekennzeichnet, dass** die Dichtung (9) und das Oberteil (6) einstückig ausgebildet sind und/oder in einem 2-Komponenten-Verfahren hergestellt sind.

9. Elektrisches Installationsgerät nach zumindest einem der vorhergehenden Patentansprüche, **dadurch gekennzeichnet, dass** das Oberteil (6) und das Unterteil (4) zusammenwirkende Führungen aufweisen.

10. Elektrisches Installationsgerät nach zumindest einem der vorhergehenden Patentansprüche, **dadurch gekennzeichnet, dass** der elektrische Einsatz (5) und das Funktionselement (7) mechanisch und/oder elektrisch zusammenwirken.

11. Elektrisches Installationsgerät nach zumindest einem der vorhergehenden Patentansprüche, **dadurch gekennzeichnet, dass** das Oberteil (6) und das Funktionselement (7) als separate körperliche Einheiten ausgebildet sind oder dass das Oberteil (6) und das Funktionselement (7) als eine körperliche Einheit ausgebildet sind.

12. Elektrisches Installationsgerät nach zumindest einem der vorhergehenden Patentansprüche, **dadurch gekennzeichnet, dass** der elektrische Einsatz (5) und das Funktionselement (7) als separate körperliche Einheiten ausgebildet sind, oder dass der elektrische Einsatz (5) und das Funktionselement (7) als eine körperliche Einheit ausgebildet sind.

13. Elektrisches Installationsgerät nach zumindest einem der vorhergehenden Patentansprüche, **dadurch gekennzeichnet, dass** das Installationsgerät (1) ein Unterteil (4) aufweist, in dem mindestens zwei Oberteile (6) angeordnet sind.

## Claims

1. An electrical installation device for installation technology which can be arranged in a fixed position and which comprises a housing (2) comprising a lower part (4) open at one side and an upper part (6) for the sealed closure of an inner space (3), wherein the lower part (4) comprises a rear wall (10) and side walls (11) and an electrical insert (5) is arranged in the lower part (4), wherein the upper part (6) comprises a functional element (7) at the user side which represents a visible cover of the installation device (1), wherein a seal (9) is arranged between the upper part (6) and the lower part (9), and wherein the upper part (6) is arranged in the lower part (4) along its total periphery between the side walls (11), **characterized in that** the upper part (6) and also the seal (9) are inserted into the lower part in a flush manner.

2. An electrical installation device in accordance with claim 1, **characterized in that** outer walls (15) of the upper part (6) and/or of the lower part (4) have a complete seal (9) over their full periphery.

3. An electrical installation device in accordance with at least one of the preceding claims, **characterized in that** at least one profile structure (12) is formed in the lower part (4) and extends from the rear wall (10) of the lower part (4) in the direction of the opening of the lower part, in particular in parallel with the side walls (11) and/or along the side walls (11).

4. An electrical installation device in accordance with claim 3, **characterized in that** the upper part (6) is arranged embedded in the lower part (4) such that the outer walls (15) of the upper part (6) and the seal (9) lie on the profile structure (12) and the outer walls (15) of the upper part (6) and the seal (9) extend between the profile structure (12) and an upper side (23) of the lower part (6).

5. An electrical installation device in accordance with at least one of the preceding claims, **characterized in that** the seal (9) has a frame shape comprising four side limbs (16) connected in one piece and a central opening (17), with the surfaces of the side limbs in particular extending transversely to an opening surface.

6. An electrical installation device in accordance with at least one of the preceding claims, **characterized in that** the seal (9) is formed in one piece and/or is manufactured in a two-component process.

7. An electrical installation device in accordance with at least one of the preceding claims, **characterized in that** the seal (9), in particular at the outer side and/or at the inner side, and inner sides (18) of the side walls (11) of the lower part (4) and/or outer walls (15) of the upper part (6) have cooperating profiles.

8. An electrical installation device in accordance with at least one of the preceding claims, **characterized in that** the seal (9) and the upper part (6) are formed in one piece and/or are manufactured in a two-component process.

9. An electrical installation device in accordance with at least one of the preceding claims, **characterized in that** the upper part (6) and the lower part (4) have cooperating guides.

10. An electrical installation device in accordance with at least one of the preceding claims, **characterized in that** the electrical insert (5) and the functional element (7) cooperate mechanically and/or electrically.

11. An electrical installation device in accordance with at least one of the preceding claims, **characterized in that** the upper part (6) and the functional element (7) are formed as separate physical units; or **in that** the upper part (6) and the functional element (7) are formed as one physical unit.

12. An electrical installation device in accordance with at least one of the preceding claims, **characterized in that** the electrical insert (5) and the functional element (7) are formed as separate physical units; or **in that** the electrical insert (5) and the functional element (7) are formed as one physical unit.

13. An electrical installation device in accordance with at least one of the preceding claims, **characterized in that** the installation device (1) has a lower part (4) in which at least two upper parts (6) are arranged.

## Revendications

1. Appareil d'installation électrique pour la technique d'installation, qui peut être disposé de manière fixe, comprenant un boîtier (2) composé d'une partie inférieure (4) ouverte d'un côté et d'une partie supérieure (6) pour la fermeture étanche d'un espace intérieur (3), la partie inférieure (4) comprenant une paroi arrière (10) et des parois latérales (11) et un dispositif électrique (5) étant disposé dans la partie inférieure (4), la partie supérieure (6) comprenant un élément fonctionnel côté utilisateur (7), qui constitue un couvercle visible de l'appareil d'installation (1), et un joint d'étanchéité (9) étant disposé entre la partie supérieure (6) et la partie inférieure (4), la partie supérieure (6) étant disposée sur toute sa périphérie entre les parois latérales (11) dans la partie inférieure (4), **caractérisé en ce que** la partie supérieure (6) ainsi que le joint d'étanchéité (9) sont insérés à fleur dans la partie inférieure.

2. Appareil d'installation électrique selon la revendication 1, **caractérisé en ce que** les parois extérieures (15) de la partie supérieure (6) et/ou de la partie inférieure (4) présentent un joint d'étanchéité (9) sur toute leur périphérie et de façon intégrale.

3. Appareil d'installation électrique selon au moins l'une des revendications précédentes, **caractérisé en ce qu'**au moins une structure profilée (12) est réalisée dans la partie inférieure (4), qui s'étend de la paroi arrière (10) de la partie inférieure (4) en direction de l'ouverture de la partie inférieure, en particulier parallèlement aux parois latérales (11) et/ou le long des parois latérales (11).

4. Appareil d'installation électrique selon la revendication 3, **caractérisé en ce que** la partie supérieure (6) est encastrée dans la partie inférieure (4) de telle sorte que les parois extérieures (15) de la partie supérieure (6) et le joint d'étanchéité (9) reposent sur la structure profilée (12) et les parois extérieures (15) de la partie supérieure (6) et le joint d'étanchéité (9) s'étendent entre la structure profilée (12) et une face supérieure (23) de la partie inférieure (6).

5. Appareil d'installation électrique selon au moins l'une des revendications précédentes, **caractérisé en ce que** le joint d'étanchéité (9) présente une forme de cadre avec quatre côtés latéraux (16) reliés d'une seule pièce et une ouverture centrale (17), les surfaces des côtés latéraux s'étendant en particulier transversalement à la surface d'ouverture.

6. Appareil d'installation électrique selon au moins l'une des revendications précédentes, **caractérisé en ce que** le joint d'étanchéité (9) est réalisé d'une seule pièce et/ou est fabriqué selon un procédé à deux composants.

7. Appareil d'installation électrique selon au moins l'une des revendications précédentes, **caractérisé en ce que** le joint d'étanchéité (9), en particulier du côté extérieur et/ou du côté intérieur, et des faces intérieures (18) des parois latérales (11) de la partie inférieure (4) et/ou des parois extérieures (15) de la partie supérieure (6) présentent des profils coopérants.

8. Appareil d'installation électrique selon au moins l'une des revendications précédentes, **caractérisé en ce que** le joint d'étanchéité (9) et la partie supérieure (6) sont réalisés d'une seule pièce et/ou sont fabriqués selon un procédé à deux composants.

9. Appareil d'installation électrique selon au moins l'une des revendications précédentes, **caractérisé en ce que** la partie supérieure (6) et la partie inférieure (4) présentent des guides coopérants.

10. Appareil d'installation électrique selon au moins l'une des revendications précédentes, **caractérisé en ce que** le dispositif électrique (5) et l'élément fonctionnel (7) coopèrent mécaniquement et/ou électriquement.

11. Appareil d'installation électrique selon au moins l'une des revendications précédentes, **caractérisé en ce que** la partie supérieure (6) et l'élément fonctionnel (7) sont réalisés sous la forme d'unités physiques séparées ou que la partie supérieure (6) et l'élément fonctionnel (7) sont réalisés sous la forme d'une unité physique.

12. Appareil d'installation électrique selon au moins l'une des revendications précédentes, **caractérisé en ce que** le dispositif électrique (5) et l'élément fonctionnel (7) sont réalisés sous la forme d'unités physiques séparées ou que le dispositif électrique (5) et l'élément fonctionnel (7) sont réalisés sous la forme d'une unité physique.

13. Appareil d'installation électrique selon au moins l'une des revendications précédentes, **caractérisé en ce que** l'appareil d'installation (1) présente une partie inférieure (4) dans laquelle au moins deux parties supérieures (6) sont disposées.
